# EUROPÄISCHE PATENTSCHRIFT

(11) **EP 0 940 637 B1**
(45) Veröffentlichungstag und Bekanntmachung des Hinweises auf die Patenterteilung: **26.10.2005**
(21) Anmeldenummer: 99103647.6
(22) Anmeldetag: 25.02.1999
(51) Int. Cl.: F24D 12/02, F02G 5/00, F02B 63/04, F02B 77/13

(54) **Energie-Kompakt-Anlage**
compact energy installation
Installation de production d'énergie compacte

(30) Priorität: 06.03.1998 DE 19809779; 30.06.1998 DE 19829192
(43) Veröffentlichungstag der Anmeldung: 08.09.1999
(73) Patentinhaber: Schako Klima Luft Ferdinand Schad KG, 78600 Kolbingen (DE)
(72) Erfinder: Müller, Gottfried, 78600 Kolbingen (DE)
(74) Vertreter: Weiss, Peter

(56) Entgegenhaltungen:
- US-A- 4 503 337
- US-A- 4 657 290
- US-A- 4 736 111
- US-A- 5 719 990

## Beschreibung

Die vorliegende Erfindung betrifft eine Energie-Kompakt-Anlage mit zumindest einem Antriebsaggregat dem wenigstens ein Generator zugeordnet ist, wobei das Antriebsaggregat zur Nutzung von Abwärme in einem schall- und/oder wärmeisolierendem Gehäuse angeordnet sowie zumindest eine Wärmetauscheinrichtung zugeordnet ist.

Derartige Antriebsaggregate sind in vielfältigster Form und Ausführung auf dem Markt bekannt und gebräuchlich. Sie dienen in erster Linie zum Erzeugen von Energie, insbesondere Strom. Sie zeichnen sich im wesentlichen dadurch aus, dass sie flexibel und unabhängig einzusetzen sind.

Nachteilig an derartigen Geräten ist, dass herkömmliche Antriebsaggregate einen hohen Energieverlust aufweisen, da sie ungenutzte Wärme abgeben. Ferner sind sie nicht geeignet, um einen Haushalt vollständig mit allen erforderlichen Energien in unterschiedlicher Form wie bspw. Strom, Wärme etc. zu versorgen.

Die US 4,736,111 sowie die US 4,657,290 beschreiben Wärme-Kraft-Kopplungssysteme, bei welchen eine primäre Antriebsvorrichtung 14 Wärme in ein Gehäuse abgibt und diese Wärme bzw. abgegebene Wärme zum Erwärmen von Brauchwasser dient.

Ein ähnliches System ist aus der US 4,503,337 sowie der US 5,179,990 aufgezeigt. Dort wird auch die von einem Antriebsaggregat abgegebene Wärme zum Erhitzen in einem Wärmetauscher von Brauchwasser genutzt.

Der vorliegenden Erfindung liegt die Aufgabe zugrunde eine Energie-Kompakt-Anlage der o.g. Art zu schaffen, welche eine separate und vollständige Energieversorgung bspw. für ein Haus zulässt, wobei ein derartiger Abnehmer völlig unabhängig von externen Energieversorgern, Wohnhäuser oder Wohnungen mit Energie versorgen kann.

Ferner sollen dabei Energiekosten reduziert und bedarfsgerecht verwendet werden. Zudem soll eine derartige Energie-Kompakt-Anlage universell einsetzbar und in herkömmliche Wohnhäuser nachrüstbar sein.

Die Lösung dieser Aufgabe wird durch die im kennzeichnenden Teil von Anspruch 1 angegebenen Merkmale erzielt.

Die vorliegende Erfindung gestattet, dass die von dem Antriebsaggregat abgegebene Wärme und die vom Antriebsaggregat abgegebenen heissen Abgase in zumindest einem Wärmetauscher ausgewertet werden. In dem Gehäuse können verschiedenste Wärmetauscher vorgesehen sein, um die Abwärme eines derartigen Antriebsaggregates zu nutzen.

Ein Wärmetauscher ist als luft- und gasdurchlässiges Register ausgebildet, welches von heisser Luft bzw. auch von heissen Abgasen des Antriebsaggregates durchströmbar ist. Hierdurch wird bspw. warmes Wasser für einen Heizboiler bzw. Heizkreislauf eines Wohnhauses oder für einen Brauchwasserboiler in einem Wohnhaus aufgewärmt. Zusätzlich kann der durch den Generator erzeugte Strom, gesteuert über eine elektrische Steuerung, eine Wärmepumpe oder eine elektrische Heizung, betreiben. Hierdurch lässt sich die gewünschte Brauchswassertemperatur oder Temperatur des Heizkreislaufes im Abnehmer exakt regeln und steuern.

Eine weitere Besonderheit der vorliegenden Erfindung ist dann gegeben, wenn zusätzlich extern oder intern im Gehäuse Energiespeicher, bspw. in Form von Batterien, vorgesehen sind. Dann kann bei geringeren Lasten auf den Betrieb des Antriebsaggregates verzichtet werden, wobei die Lastabnehmer über die Energiespeicher versorgt werden.

Eine weitere besonders vorteilhafte Ausgestaltung der Erfindung zeigt eine zusätzliche Wärmetauscheinrichtung, welche Warmluft zum Beheizen von Räumen, insbesondere über ein Belüftungssystem, in das Gebäude einbringt. Dieser Wärmetauscheinrichtung wird Luft über einen Einlassstutzen zugeführt und erwärmte Luft über einen Auslassstutzen in ein Belüftungssystem zugeführt. Von dort können eine Mehrzahl von Räume beheizt werden.

Insgesamt ist mit der vorliegendnen Erfindung eine Anlage, insbesondere eine Energie-Kompakt-Anlage geschaffen, welche selbstständig und unabhängig von fremden und externen Energien ein Haus oder ein Wohnraum mit Energie versorgen kann. Sind die Abnehmer wie bspw. Brauchwasser, Boiler oder Heizkreislaufboiler nachts nicht im Betrieb und wird in einem Haushalt nur geringfügig Energie verbraucht, so schaltet sich automatisch das Antriebsaggregat ab. Der übrige Energiebedarf wird über die Energiespeicher insbesondere Batterien abgedeckt.

Ferner entfallen bei einer derartigen Anlage herkömmliche Schornsteinfegerkosten sowie Anschlussgebühren der Energieversorger pro Einfamilienhaus, die in etwa bei DM 4.000,-- bis DM 6.000,-- liegen. Es können herkömmliche teure Heizkörper, Heizkessel oder Stromversorgungsanlagen etc. entfallen.

Durch die Verwendung von Wohnraumbe- und entlüftungsanlagen wird zugleich der Wohnung zusätzlich die notwendige Frischluft zugeführt. Ferner können durch die Verwendung von Biotreibstoffen als Energielieferanten für das Antriebsaggregat sehr umweltfreundlich und vollständige Energieversorgungen auf engstem Raum preisgünstig ausgenutzt werden.

In einem weiteren Ausführungsbeispiel der vorliegenden Erfindung wird über eine Wärmetauscheinrichtung, wie sie oben beschrieben ist, Energie bspw. einem Blockheizkraftwerk entzogen. Die Wärmetauscheinrichtung wird ebenfalls über ein Medium, insbesondere Wasser betrieben und führt Wärme einem Abnehmer, insbesondere Boiler zu. Dieser Boiler oder zumindest ein Teil von ihm kann über vorzugsweise externe Energie, bevorzugt mittels eines Brenners, stark erhitzt werden, so dass im Abnehmer bzw. Boiler eine Dampferzeugung stattfindet. Dieser Überdruck, insbesondere dieser Wasserdampf, wird in einem dem Abnehmer zugeordneten Energiewandler, insbesondere Dampfgenerator zu Strom umgewandelt. Hierdurch kann die Abwärme bspw. eines Blockheizkraftwerkes zur direkten Stromerzeugung genutzt werden, was dessen Wirkungsgrad wesentlich steigert.

Die Dampfturbinen, welche zur Stromerzeugung eingesetzt werden, können nur mit geringfügigem, zusätzlichen Energieaufwand betrieben werden. Es ist lediglich die Temperaturdifferenz zwischen der Temperatur der Abwärme und der Temperatur, welche zur Dampferzeugung notwendig ist, erforderlich. Ebenfalls wird das Kondensat, welches an dem Dampfgenerator abfällt und dessen Temperatur in etwa bei 90°C liegt, dem Abnehmer, insbesondere dem Boiler wieder zugeführt.

Hierdurch wird die Abwärme eines derartigen Blockheizkraftwerkes, welches bspw. nach herkömmlicher Art durch fossile Brennstoffe, wie Gas, Öl, Biobrennstoffe, Holzschnipsel, Altöl oder anderen fossilen Brennstoffen betrieben wird, ausgenutzt.

Ferner müssen derartige Blockheizkraftwerke gekühlt werden, wozu frisches Brauchwasser verwendet wird. Dieses wird dem Kreislauf zugeführt. Es erwärmt sich und muss dann über Kühlflächen abgeleitet und luftgekühlt werden. Hierzu können Düsen oder Ventilatoren vorgesehen sein, welche die Umgebungsluft direkt unter der warmwasserführenden Fläche abführt, so dass das Wasser besser gekühlt werden kann. Dieses Wasser kann über Becken, Erdbecken oder Erdauffangbehälter gesammelt werden. Diese sind in gewissen Abständen aneinandergereiht, um die Abkühlung von einem Becken zum nächsten bis zur gewünschten Wassertemperatur zu gewährleisten. Aus dem letzten, jeweils erkaltetem Becken, wird das kalte Wasser zur Kühlung der Heizkraftwerke erneut in dessen Kreislauf gebracht. Zudem kann das vollständige Wasserreservoir bspw. unter der Verwendung von Regenwasser nachgefüllt werden, damit immer genügend frisches Wasser im Umlauf ist. Entsprechende Überläufe regeln das Wasserreservoir.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische, blockschaltbildliche Darstellung einer erfindungsgemässen Anlage zum Erzeugen von Energie;
Figur 2 eine teilweise aufgeschnittene blockschaltbildliche Seitenansicht der Anlage gemäss Figur 1;
Figur 3 eine schematisch, blockschaltbildliche Darstellung einer weiteren Anlage gemäss Figur 1.

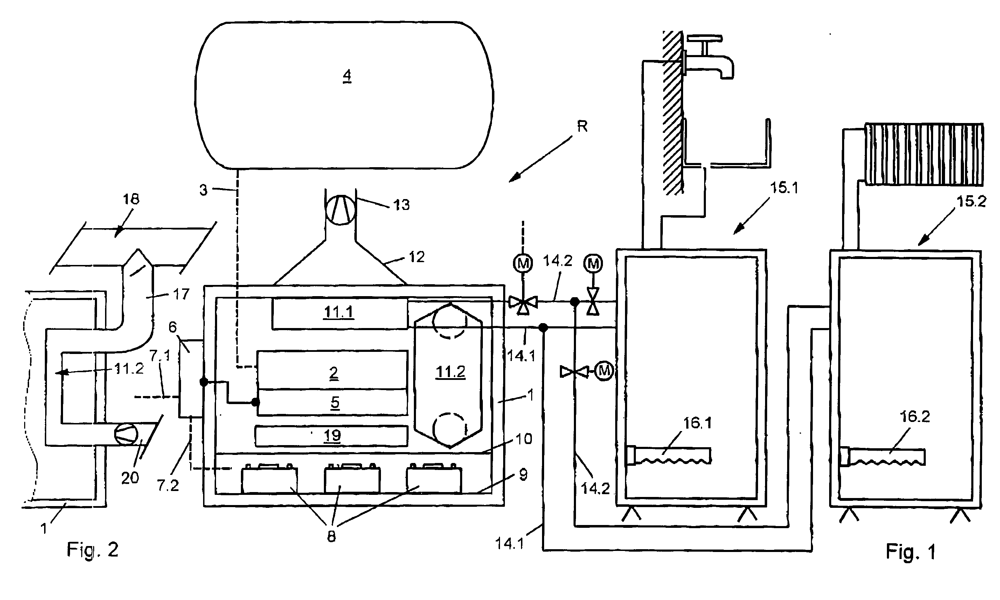

Gemäss Figur 1 weist eine erfindungsgemässe Anlage R zum Erzeugen von Energie, insbesondere Energie-Kompakt-Anlage, ein Gehäuse 1 auf, welches vorzugsweise schall- und wärmeisolierend ausgebildet ist. Bevorzugt ist das Gehäuse 1 luftundurchlässig ausgebildet. In etwa mittig des Gehäuses 1 ist ein Antriebsaggregat 2 vorgesehen, welches über eine hier gestrichelt angedeutete Verbindungsleitung 3 mit einem Energiereservoir 4 in Verbindung steht. Im vorliegendem Ausführungsbeispiel ist das Energiereservoir 4 extern zum Gehäuse 1 angeordnet. Es soll jedoch auch daran gedacht sein, das Energiereservoir 4 in das Gehäuse 1 zu intergrieren. Es liefert die notwendige Energie für das Antriebsaggregat 2. Hierbei ist an Benzin, Diesel, Rapsöl, Bioöl, aus unterschiedlichen Pflanzen, oder sonstigen Biostoffen gedacht.

Das Antriebsaggregat 2 ist mit einem Generator 5 verbunden. Dieser Generator 5 steht mit einer Steuereinrichtung 6 in Verbindung, welche über hier nur angedeutete Leitungen 7.1, 7.2 die Verteilung und Regelung des Stromes vornimmt. Die Leitung 7.1 führt zu beliebigen Lastabnehmern bspw. eines Hauses. Wird nur geringe Last bspw. in der Nacht erfrodert, so schaltet die Steuereinrichtung 6 auf eigene Energiespeicher 8 um, welche im Gehäuse 1 angeordnet sind. Vorzugsweise sind die Energiespeicher 8 nahe eines Gehäusebodens 9 angeordnet, und werden über eine Trennwand 10 abgeschottet.

Die Anlage R liefert bspw. nachts ohne dass der Generator 5 und damit auch das Antriebsaggregat 2 betrieben werden müssen permanent Energie aus dem Energiespeicher 8. Die Steuereinrichtung 6 übernimmt die hierzu notwendige Steuerung und Regelung. Fällt ein bestimmtes Spannungspotential der Energiespeicher 8 ab, so wird automatisch über die Steuereinrichtung 6 das Antriebsaggregat 2 einschaltet und lädt die vorzugsweise intern im Gehäuse 1 angeordneten Energiespeicher 8 auf. Gleichzeitig liefert bei höheren Lasten der Generator 5 genügend Strom, um alle Lastabnehmer bspw. eines Einfamilienhauses ausreichend mit Energie zu versorgen.

Eine weitere Besonderheit der vorliegenden Erfindung ist, dass die Abwärme des Antriebsaggregates 2 genutzt wird. Durch das wärmeisolierte Gehäuse 1 wird im Inneren eine hohe Wärme erzeugt. Diese Wärme wird über Wärmetauscheinrichtungen 11.1, 11.2 genutzt.

Die Wärmetauscheinrichtung 11.1 ist vorzugsweise als luft- und abgasdurchlässiges Register ausgebildet. Dieses ist bevorzugt oberhalb des Antriebsaggregates 2 angeordnet, durch welches die erwärmte Luft im Gehäuse 1 nach aussen austreten kann. Der Wärmetauscheinrichtung 11.1 ist nach aussen hin ein Abluftaufnahmeelement 12 zugeordnet. Das Abluftaufnahmeelement 12 führt unmittelbar in das Freie und gibt die Wärme bzw. Abluft des Antriebsaggregates 2 über einen Abluftkanal 13 ab. Frischluft wird über einen dem Gehäuse 1 zugeordneten Einlass 19 zugeführt. Dies kann auch vorgewärmte Raumluft oder Frischluft sein.

Die Wärmetauscheinrichtung 11.1 steht über Wärmeleitungen 14.1, 14.2 mit zumindest einem Abnehmer 15.1, 15.2 in Verbindung. Entsprechende regelbare und hier nicht näher bezifferte Ventile und Wärmepumpen regeln den Volummenstrom beim Wärmeaustausch der Wärmetauscheinrichtung 11.1. Die Abnehmer 15.1, 15.2 können bspw. Boiler für Brauchswasser oder Boiler für einen Heizkreislauf, wie es hier angedeutet ist, sein. Zusätzlich können in den Boilern elektrische Heizelemente 16.1, 16.2 vorgesehen sein, welche über die Energiespeicher 8 oder direkt über den Generator 5 betreibbar sind.

Ein weiterer Wärmetauscher 11.2 ist vorzugsweise seitlich in dem Gehäuse 1 vorgesehen. Dieser dient im wesentlichen, wie es insbesondere in Figur 2 dargestellt ist, zum Erwärmen von Luft, wobei die Luft durch einen Einlassstutzen 20 in das Gehäuse 1 einströmt, durch die Wärmetauscheinrichtung 11.2 im Gleichstrom oder Gegenstromverfahren weitertransportiert und über einen Auslassstutzen 17 einem Belüftungssystem 18 zugeführt wird. Der Auslassstutzen 17 kann bspw. direkt in einen Raum einmünden. Über das Belüftungssystem 18 können einzelne Räume, welche daran angeschlossen sind, regelbar beheizt werden.

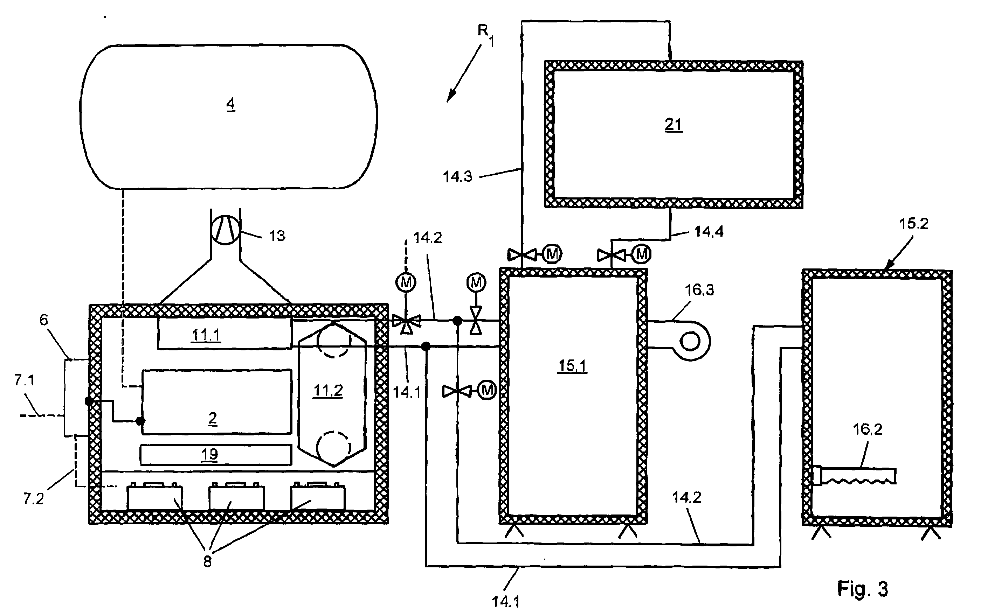

Gemäss Figur 3 ist eine weitere Anlage R₁ aufgezeigt, welche im wesentlichen die in den Figuren 1 und 2 aufgezeigten Bauteile beinhaltet. Unterschiedlich ist hier, dass an den Abnehmer 15.1 anstelle des Heizelementes 16.1 ein Heizelement 16.3 extern, bspw. als Brenneinrichtung anschliesst. Über das externe Heizelement 16.3 lässt sich der Abnehmer 15.1 aufheizen.

Insbesondere gelangt in diesem Ausführungsbeispiel durch Abwärme vorgewärmtes Wasser in den Abnehmer 15.1, welcher im vorliegenden Ausführungsbeispiel als Boiler ausgebildet ist.

Das durch Abwärme erwärmte Wasser im Abnehmer 15.1 kann durch das Heizelement 16.3 weiter erhitzt werden. Dieses wird dann über weitere Wärmeleitungen 14.3, 14.4 einem Energiewandler 21 zugeführt. Bevorzugt ist der Energiewandler 21 als Dampfgenerator ausgebildet.

Die Temperatur im Abnehmer 15.1, insbesondere Boiler wird derartig erhitzt, dass sie zur Energieerzeugung, insbesondere Stromerzeugung im Energiewandler 21, insbesondere Dampfgenerator geeignet ist.

Die Abwärme, welche bspw. über Blockheizkraftwerke gewonnen wird, erwärmt das Wasser im Abnehmer 15.1 bis etwa 70 bis 80°C. Über den Brenner bzw. über das Heizelement 16.3 muss lediglich die Temperaturdifferenz in Form von Energie zugeführt werden, die für den Dampfgenerator bzw. Energiewandler 21 erforderlich ist.

Daher wird die Temperatur im Abnehmer 15.1 lediglich auf Dampferzeugungstemperatur aufgeheizt und anschliessend der Wasserdampf dem Dampfgenerator zur Erzeugung von Energie zugeführt. Das Kondensat, welches aus dem Dampfgenerator ausscheidet, hat eine Temperatur von etwa 90°C und kann über die Wärmeleitung 14.4 dem Abnehmer 15.1 direkt zugeführt werden. Hierdurch entsteht ein Umlauf, wobei lediglich die Temperaturdifferenz zwischen der Dampferzeugungstemperatur und der Temperatur im Abnehmer 15.1 durch das Heizelement 16.3 zugeführt werden muss.

In dem Ausführungsbeispiel der vorliegenden Erfindung gemäss Figur 3 ist die Wärmetauscheinrichtung 11.1 einem Blockheizkraftwerk zugeordnet. Diese Abwärme, mittels welcher bei herkömmlichen Blockheizkraftwerken eine Beheizung von Wohnungen oder sonstigen Gebäuden vorgenommen wurde, kann nun zur Stromerzeugung direkt verwendet werden. Dies steigert den Wirkungsgrad von Blockheizkraftwerken erheblich. Die grossen Temperaturverluste durch Fernleitungen und dgl. können entfallen.

## Patentansprüche

1. Energie-Kompakt-Anlage mit zumindest einem Antriebsaggregat (2) dem wenigstens ein Generator (5) zugeordnet ist, wobei das Antriebsaggregat (2) zur Nutzung von Abwärme in einem schall- und/oder wärmeisolierendem Gehäuse (1) angeordnet, sowie zumindest eine Wärmetauscheinrichtung (11.1, 11.2) zugeordnet ist,
**dadurch gekennzeichnet,**
**dass** am Gehäuse (1) ein Einlass (19) als Frischluftzufuhr vorhanden ist und
**dass** die eine Wärmetauscheinrichtung (11.1) als luft- und abgasdurchlässiges Register oberhalb des Antriebsaggregates (2) im Gehäuse (1) angeordnet ist und an wenigstens einen Abnehmer (15.1, 15.2) anschliesst und die andere Wärmetauschereinrichtung (11.2) mit einem Belüftungssystem (18) in Verbindung steht, wobei diese Wärmetauscheinrichtung (11.2) seitlich im Gehäuse (1) angeordnet ist, wobei ein Einlassstutzen (20) und ein Auslassstutzen (17) in das Gehäuse (1) einragen.

2. Energie-Kompakt-Anlage nach Anspruch 1, **dadurch gekennzeichnet, dass** an die eine Wärmetauscheinrichtung (11.1) ein Abluftaufnahmeelement (12) ggf. trichterartig anschliesst und die andere Wärmetauscheinrichtung als luftdurchlässiges Register ausgebildet ist.

3. Energie-Kompakt-Anlage nach Anspruch 2, **dadurch gekennzeichnet, dass** das Abluftaufnahmeelement (12) ausserhalb des Gehäuses (1) angeordnet ist und einen Abluftkanal (13) aufweist.

4. Energie-Kompakt-Anlage nach wenigstens einem der Ansprüche 1 bis 3, **dadurch gekennzeichnet, dass** die Wärmetauscheinrichtung (11.2) an ein Belüftungssystem (18) anschliessbar ist, wobei die Wärmetauscheinrichtung (11.2) im Gehäuse (1) im Gleichstrom und/oder im Gegenstrom verfahren, betreibbar ist.

5. Energie-Kompakt-Anlage nach wenigstens einem der Ansprüche 1 bis 4, **dadurch gekennzeichnet, dass** der Generator (5) mit einer elektrischen Steuerung (6) zur Versorgung von wenigstens einem internen Energiespeicher (8) und/oder externen Lastabnehmer in Verbindung steht.

6. Energie-Kompakt-Anlage nach Anspruch 5, **dadurch gekennzeichnet, dass** der zumindest eine Energiespeicher (8) innerhalb im Gehäuse (1) ggfs. abgeschottet über eine Trennwand (10) eingelagert ist.

7. Energie-Kompakt-Anlage nach Anspruch 5 oder 6, **dadurch gekennzeichnet, dass** die Energiespeicher (8) nahe eines Gehäusebodens (9) vorgesehen sind.

8. Energie-Kompakt-Anlage nach wenigstens einem der Ansprüche 1 bis 7, **dadurch gekennzeichnet, dass** das Antriebsaggregat (2) mit einem externen und/oder internen Energiereservoir (4), insbesondere Treibstofftank verbunden ist.

9. Energie-Kompakt-Anlage nach wenigstens einem der Ansprüche 1 bis 8, **dadurch gekennzeichnet, dass** in den Wärmetauscheinrichtungen (11.1, 11.2) die abgegebene Wärme des Antriebsaggregates (2) über verschiedenste Medien wie Luft, Wasser, Öl transportierbar ist.

10. Energie-Kompakt-Anlage, welche über eine Wärmetauscheinrichtung (11.1) Abwärme, ggf. eines Blockheizkraftwerkes zumindest einem Abnehmer (15.1, 15.2) zuführt, **dadurch gekennzeichnet, dass** die Temperatur im Abnehmer (15.1, 15.2) mittels wenigstens einem Heizelement (16.3) erhöht und durch die Temperaturerhöhung im Abnehmer (15.1, 15.2) ein Energiewandler (21) zur Erzeugung von Energie antreibbar ist.

11. Energie-Kompakt-Anlage nach Anspruch 10, **dadurch gekennzeichnet, dass** dem zumindest einem Abnehmer (15.1, 15.2) wenigstens ein Energiewandler (21) zugeordnet ist.

12. Energie-Kompakt-Anlage nach Anspruch 10 oder 11, **dadurch gekennzeichnet, dass** der Energiewandler (21) über Wärmeleitungen (14.1, 14.2) mit dem Abnehmer (15.1) verbunden und ggf. ein Kreislauf gebildet ist.

13. Energie-Kompakt-Anlage nach wenigstens einem der Ansprüche 10 bis 12, **dadurch gekennzeichnet, dass** der Energiewandler (21) als dampfbetriebener Generator zur Erzeugung von Strom ausgebildet ist.

## Claims

1. Compact energy installation having at least one drive unit (2), with which at least one generator (5) is associated, the drive unit (2) being disposed in a sound-insulating and/or heat-insulating housing (1) to utilise waste heat, as well as at least one heat exchanging means (11.1, 11.2) being associated with said drive unit, **characterised in that** an inlet (19) is provided on the housing (1) as the means for supplying fresh air, and **in that** the one heat exchanging means (11.1) is disposed as an air-permeable and waste gas-permeable conduit above the drive unit (2) in the housing (1) and communicates with at least one consumer (15.1, 15.2), and the other heat exchanging means (11.2) is connected to a ventilation system (18), this heat exchanging means (11.2) being disposed laterally in the housing (1), and an inlet connection (20) and an outlet connection (17) protruding into the housing (1).

2. Compact energy installation according to claim 1, **characterised in that** a waste air receiving element (12), which is possibly funnel-shaped, communicates with the one heat exchanging means (11.1), and the other heat exchanging means is in the form of an air-permeable conduit.

3. Compact energy installation according to claim 2, **characterised in that** the waste air receiving element (12) is disposed externally of the housing (1) and has a waste air duct (13).

4. Compact energy installation according to at least one of claims 1 to 3, **characterised in that** the heat exchanging means (11.2) is communicatable with a ventilation system (18), the heat exchanging means (11.2) in the housing (1) being operable so as to move in a direct flow and/or in a counter-flow.

5. Compact energy installation according to at least one of claims 1 to 4, **characterised in that** the generator (5) is connected to an electrical control (6) to supply at least one internal energy accumulator (8) and/or external load receiver.

6. Compact energy installation according to claim 5, **characterised in that** the at least one energy accumulator (8) is incorporated internally in the housing (1), possibly partitioned-off by a dividing wall (10).

7. Compact energy installation according to claim 5 or 6, **characterised in that** the energy accumulators (8) are provided close to a housing base (9).

8. Compact energy installation according to at least one of claims 1 to 7, **characterised in that** the drive unit (2) is connected to an external and/or internal energy reservoir (4), more especially a fuel tank.

9. Compact energy installation according to at least one of claims 1 to 8, **characterised in that** the dissipated heat of the drive unit (2) is transportable in the heat exchanging means (11.1, 11.2) via the most varied media, such as air, water or oil.

10. Compact energy installation, which supplies waste heat, possibly from a unit-type heating power station, to at least one consumer (15.1, 15.2) via a heat exchanging means (11.1), **characterised in that** the temperature in the consumer (15.1, 15.2) is increased by means of at least one heating element (16.3), and an energy converter (21) for generating energy is drivable by the increase in temperature in the consumer (15.1, 15.2).

11. Compact energy installation according to claim 10, **characterised in that** at least one energy converter (21) is associated with the at least one consumer (15.1, 15.2).

12. Compact energy installation according to claim 10 or 11, **characterised in that** the energy converter (21) is connected to the consumer (15.1) via heat conducting pipes (14.1, 14.2), and a circuit is possibly formed.

13. Compact energy installation according to at least one of claims 10 to 12, **characterised in that** the energy converter (21) is in the form of a steam-operated generator to generate current.

## Revendications

1. Installation de production d'énergie compacte avec au moins un ensemble d'entraînement (2) auquel est associé au moins un générateur (5), l'ensemble d'entraînement (2) étant disposé, en vue de l'utilisation de la chaleur résiduelle, dans un boîtier (1) isolant acoustique et/ou isolant thermique, ainsi qu'il y est associé au moins un dispositif d'échange de chaleur (11.1, 11.2),
**caractérisée par le fait**
**qu'**au boîtier (1) est présente une entrée (19) comme admission d'air frais, et
**que** l'un dispositif échangeur de chaleur (11.1) réalisé sous forme de registre perméable à l'air et aux gaz d'échappement est disposé au-dessus de l'ensemble d'entraînement (2) dans le boîtier (1) et vient se raccorder à au moins un utilisateur (15.1, 15.2) et que l'autre dispositif échangeur de chaleur (11.2) communique avec un système d'aération (18), ce dispositif échangeur de chaleur (11.2) étant disposé latéralement dans le boîtier (1), une tubulure d'entrée (20) et une tubulure de sortie (17) pénétrant dans le boîtier (1).

2. Installation de production d'énergie compacte selon la revendication 1, **caractérisée par le fait qu'**à l'un dispositif échangeur de chaleur (11.1) vient se raccorder un élément de réception d'air d'échappement (12), éventuellement en forme d'entonnoir, et que l'autre dispositif échangeur de chaleur est réalisé sous forme de registre perméable à l'air.

3. Installation de production d'énergie compacte selon la revendication 2, **caractérisée par le fait que** l'élément de réception d'air d'échappement (12) est disposé à l'extérieur du boîtier (1) et présente un canal à air d'échappement (13).

4. Installation de production d'énergie compacte selon au moins l'une des revendications 1 à 3, **caractérisée par le fait que** le dispositif échangeur de chaleur (11.2) peut être raccordé à un système d'aération (18), le dispositif échangeur de chaleur (11.2) pouvant fonctionner dans le boîtier (1) selon un procédé à courant direct ou à contre-courant.

5. Installation de production d'énergie compacte selon au moins l'une des revendications 1 à 4, **caractérisée par le fait que** le générateur (5) communique avec une commande électrique (6) pour l'alimentation d'au moins un accumulateur d'énergie intérieur (8) et/ou un utilisateur de charge extérieur.

6. Installation de production d'énergie compacte selon la revendication 5, **caractérisée par le fait que** l'au moins un accumulateur d'énergie (8) est monté à l'intérieur du boîtier (1), éventuellement séparé par l'intermédiaire d'une cloison (10).

7. Installation de production d'énergie compacte selon la revendication 5 ou 6, **caractérisée par le fait que** l'accumulateur d'énergie (8) est prévu près d'un fond de boîtier (9).

8. Installation de production d'énergie compacte selon au moins l'une des revendications 1 à 7, **caractérisée par le fait que** l'ensemble d'entraînement (2) est relié à un réservoir d'énergie (4) extérieur et/ou intérieur, en particulier un réservoir à combustible.

9. Installation de production d'énergie compacte selon au moins l'une des revendications 1 à 8, **caractérisée par le fait que** la chaleur dégagée de l'ensemble d'entraînement (2) peut être transportée dans les dispositifs échangeurs de chaleur (11.1, 11.2) par l'intermédiaire de fluides les plus divers, tels que de l'air, de l'eau, de l'huile.

10. Installation de production d'énergie compacte qui alimente, par l'intermédiaire d'un dispositif échangeur de chaleur (11.1), de la chaleur résiduelle, éventuellement d'une centrale de chauffage à distance, vers au moins un utilisateur (15.1, 15.2), **caractérisée par le fait que** la température dans l'utilisateur (15.1, 15.2) est élevée au moyen d'au moins un élément chauffant (16.3) et que par l'élévation de la température dans l'utilisateur (15.1, 15.2) peut être entraîné un transformateur d'énergie (21) pour la production d'énergie.

11. Installation de production d'énergie compacte selon la revendication 10, **caractérisée par le fait qu'**à l'au moins un utilisateur (15.1, 15.2) est associé au moins un transformateur d'énergie (21).

12. Installation de production d'énergie compacte selon la revendication 10 ou 11, **caractérisée par le fait que** le transformateur d'énergie (21) est relié, par l'intermédiaire de conduits de chaleur (14.1, 14.2), à l'utilisateur (15.1) et qu'il est éventuellement formé un circuit.

13. Installation de production d'énergie compacte selon au moins l'une des revendications 10 à 12, **caractérisée par le fait que** le transformateur d'énergie (21) est réalisé sous forme de générateur fonctionnant à la vapeur, en vue de générer du courant.
